# EUROPEAN PATENT APPLICATION

(11) **EP 4 379 281 A1**
(43) Date of publication of application: **05.06.2024**
(21) Application number: 23213413.0
(22) Date of filing: 30.11.2023
(51) Int. Cl.: F24F 12/00, F24F 11/75, F24F 110/50

(54) **HYGIENIC BALANCED VENTILATION SYSTEM AND METHOD OF CONTROLLING SUCH A VENTILATION SYSTEM**

(30) Priority: 30.11.2022 BE 202205971
(71) Applicant: Vero Duco N.V., 8630 Veurne (BE)
(72) Inventor: RENSON, Luc Louis, 8620 Nieuwpoort (BE); MAERTENS, Koen, 8670 Oostduinkerke (BE)
(74) Representative: Nederlandsch Octrooibureau

(57) **Abstract**

The current invention involves a method for ventilative cooling of a building. In particular, the invention is a method for controlling a hygienic ventilation system comprising a supply current passage that extends between a main supply connection and at least one auxiliary supply connection and supply flow control means to ensure a supply airflow from the main supply connection via the supply flow passage to at least one auxiliary supply connections; and an exhaust flow passage that extends between a main exhaust flow connection and at least one auxiliary exhaust flow connection and exhaust flow control means to ensure an air exhaust flow from the at least one auxiliary exhaust flow connection via the exhaust flow passage to the main exhaust flow connection. This method involves the steps of ensuring an airflow with an air supply flow in function of one or more rooms in the building related to the air quality; and assuring an air exhaust flow that is consistent with the sum of the air supply and the thermal exhaust.

## Description

The current invention involves a method for controlling a hygienic balanced ventilation system for ventilative cooling of a building. The current invention also refers to a hygienic ventilation system and a hybrid ventilation system comprising this type of hygienic ventilation system as a central ventilation system.

The current invention also involves a computer-implemented method, a data processing device, a computer program that contains instructions to have a hygienic ventilation system perform the steps of the aforementioned method and a computer-readable storage medium containing the computer program.

### State of the Art of Technology

Due to climate change, there are more and more periods of high temperatures, drought and much sun. This causes discomfort from overheating in residences. There is overheating of a residence if the interior temperature exceeds 25 degrees for a long period of time. This heat remains in the house for a long time and it is thus hard to keep the house cool. There is also an increasing need for cooling because houses are better insulated. No heat is lost in the winter, but no cold air can enter in the summer. Once a residence is warm, it is hard to bring the temperature down.

This is especially the case in apartments. There the heat also comes from neighbouring apartments, so sun shades can help, but are not effective enough to keep the temperature under control, so a solution must be found to remove the heat from an apartment.

It is difficult to cool these residences. If district heating is in use, active cooling solutions (such as air-water heat pumps) are difficult to use. Solutions with air-conditioners (e.g. air-air heat pumps) then have acoustic and sustainable energy sources as a challenge.

A passive alternative is naturally cooling with air through actively opening shutters (or windows), but because there is sometimes no availability of two facades and/or there is no skylight, natural flows are often limited, so big shutters are required or a limited cooling capacity is realized.

One variant of natural cooling without using energy, is to mechanically evacuate the heat from the residence. As a result, natural solutions for cooling and hygienic mechanical ventilation systems are installed next to each other and there is no synergy between these systems in one residence, with the risk of suboptimal air quality, reduced comfort and often reduced energy performance.

This problem is very acute especially in apartments due to the specific energy provision, smaller dimensions and the collective character of energy exchange with the neighbouring apartments. But it is a general problem that applies for any type of residence, above all when there is no natural air current coming through or cross ventilation or thermal air flow.

### Objective of the invention

The current invention and the preferred designs of it have the objective of offering a solution for one or more of the aforementioned disadvantages. One objective of the invention can therefore be to create a balanced ventilation system that is also suitable for ventilative cooling of the same residence.

Another objective of the invention can therefore be to create a method for controlling a hygienic ventilation system that is suitable for ventilative cooling of a residence.

In particular, one objective of the invention can be creating a ventilation system D, also known as a balanced ventilation system, that is suitable for hygienic balanced ventilation and for ventilative cooling of the same residence. Preferably with a limited influence on the acoustic load, the price and the performance or use of the ventilation system.

### Description of the invention

This objective is achieved, according to the invention, with a method for ventilative cooling of a building that displays the technical characteristics of the first independent claims.

The current invention is a method for controlling a hygienic ventilation system. The term "hygienic ventilation system" refers to the whole of various components that ensure that the air in rooms of the building are refreshed in a controlled manner.

In particular, the invention is a method for controlling a hygienic ventilation system comprising a supply current passage that extends between a main supply connection and at least one auxiliary supply connection and supply flow control means to ensure a supply airflow from the main supply connection via the supply flow passage to at least one auxiliary supply connections; and an exhaust flow passage that extends between a main exhaust flow connection and at least one auxiliary exhaust flow connection and exhaust flow control means to ensure an air exhaust flow from the at least one auxiliary exhaust flow connection via the exhaust flow passage to the main exhaust flow connection. The term "connection" refers to an open end where an air passage may or may not be connected, such as an opening in the housing of the ventilation box or the end of an air passage. This type of hygienic ventilation system is described, for example, in NL 2014612 and NL 2022733, the content of which is included here for reference.

These and other conventional demand-based systems, such as known from the patent publications US 2012/064818 A1 and EP 4,036,486 A1, the flow can only be controlled as a function of measured air quality, in particular the CO² value of the air.

In a first aspect of the invention, which may occur in combination with the other aspects and embodiments of the invention described herein, the invention comprises a method for the regulation of this type of hygienic ventilation system to cool a building through ventilation. This method involves the steps of ensuring an airflow with an air supply flow rate Q_{SUP} in function of one or more rooms in the building related to the air quality; and the insurance of an air supply flow with an air exhaust flow rate Q_{ETA} that is consistent with the sum of the air supply Q_{SUP} and the thermal exhaust. For example, a thermal exhaust of at least 5 m³/hour, of at least 10 m³/hour, of at least 15 m³/hour, of at least 20 m³/hour, of at least 25 m³/hour, of at least 30 m³/hour, of at least 35 m³/hour, of at least 40 m³/hour of at least 45 m³/hour or of at least 50 m³/hour. In a preferred embodiment, the thermal exhaust is at least 100 m³/hour or at least 150 m³/hour.

In other words, the air supply flow rate Q_{SUP}, that flows through the residence, is determined as in conventional demand-driven ventilation systems but the air exhaust flow rate Q_{ETA} that flows out of the residence is higher than in conventional demand-driven ventilation systems such that more flow is exhaust than can be used to cool the building by ventilation. When using multiple auxiliary connections, the air supply flow rate Q_{SUP} and the air exhaust flow rate Q_{ETA} are respectively distributed over the multiple auxiliary connections and the air supply Q_{SUP} and the air exhaust Q_{ETA} are consistent with the sum of the individual flows per auxiliary connection.

The same effect of a hygienic balanced ventilation system goes against the current knowledge of hygienic ventilation. Because the air supply and exhaust flows are different, the central ventilation system will ventilate in an unbalanced manner and at least one of the flows will not be consistent with the pre-determined hygienic ventilation flow. In accordance with the applicable standard for ventilation in buildings, such as the Dutch standard NEN 1087, control is based on one or more parameters related to air quality, in particular the relative humidity, RV and/or the CO² content. As known, these air quality parameters can be measured during the exhaust in one of the exhaust routes, i.e. measurement of the exhaust air or for exhaust for one or more rooms of the building, measured from the air to be released.

But by suctioning off an additional thermal flow on top of the hygienic flows, an extra supply of fresh, cool air can be brought into the building. This type of extra flow can occur, for example, using opening elements in the residence.

In addition, considering that this does not require the application of the supply flow rate Q_{SUP}, no extra power is used and no extra noise is generated in bedrooms, for example.

In a first embodiment, which may occur in combination with the other aspects and embodiments of the invention described here involves an aforementioned method, wherein the supply flow regulators are formed by a supply booster to create an air supply low from the main supply connection via the supply air passage to at least one auxiliary supply connection; and wherein the exhaust flow regulators are formed by an exhaust catalyst for creating an air exhaust flow from the main exhaust connection via the exhaust flow passage to at least one auxiliary flow connection. The method further comprises the steps of:
- ensuring the air supply flow by creating the air supply flow with the air supply flow rate Q_{SUP} with the supply booster; and
- ensuring the air exhaust flow by creating the air exhaust flow with the air supply flow rate Q_{ETA} with the supply booster.

In a second embodiment, which may occur in combination with the other aspects and embodiments of the invention described here involves an aforementioned method, wherein the supply flow regulators are formed by one or more supply regulator valves for controlling the air supply low of a generated air flow that flows from the main supply connection via the supply air passage to at least one auxiliary supply connection; and wherein the exhaust flow regulators are formed by one or more exhaust valves for controlling the air exhaust flow from the main exhaust connection via the exhaust flow passage to at least one auxiliary flow connection. The method further comprises the steps of:
- ensuring the air supply flow by creating the air supply flow by controlling the air supply flow rate Q_{SUP} with the supply regulator valves; and
- ensuring the air exhaust flow by creating the air exhaust flow with the air supply flow rate Q_{ETA} with the exhaust control valves.

In one embodiment, which may occur in combination with the other aspects and embodiments of the invention described here involves an aforementioned method, wherein one of the supply control valves are formed by a constant supply volume regulator for limiting the flow of supply air, and wherein one of the outlet regulator valves is formed by a constant exhaust volume regulator for limiting the air exhaust flow.

In one embodiment, which may occur in combination with the other aspects and embodiments of the invention described here involves an aforementioned method comprising controlling the supply flow and exhaust flow control means based on one or more parameters related to the ventilation status of a hygienic ventilation system, such that:
- when the hygienic ventilation system is in a hygienic ventilation mode, the air supply flow rate Q_{SUP} and exhaust flow rate Q_{ETA} are consistent with a hygienic flow related to the air quality in one or more rooms of the building,
- when the hygienic ventilation system is in a summer night ventilation mode, the air supply flow rate Q_{SUP} and exhaust flow rate Q_{ETA} are consistent with a hygienic flow related to the air quality in one or more rooms of the building and the air exhaust flow rate Q_{ETA} is consistent with the sum of the hygienic flow and a thermal flow.

In another embodiment, the central hygienic ventilation system also has a heat exchanger through which the supply flow air passage and the exhaust flow air passage are in a heat exchanging relationship to each other, and the hygienic ventilation system is designed to prevent heat exchange using the heat exchanger between the air supply flow and exhaust flow when the hygienic ventilation system is in the summer night ventilation mode.

In a second aspect of the invention, which may occur in combination with the other aspects and embodiments of the invention described here, the invention is a hygienic ventilation system for ventilating a building comprising a supply current passage that extends between a main supply connection and at least one auxiliary supply connection and supply flow control means to ensure a supply airflow from the main supply connection via the supply flow passage to at least one auxiliary supply connections; and an exhaust flow passage that extends between a main exhaust flow connection and at least one auxiliary exhaust flow connection and exhaust flow control means to ensure an air exhaust flow from the at least one auxiliary exhaust flow connection via the exhaust flow passage to the main exhaust flow connection.

In one embodiment which may occur in combination with the other aspects and embodiments of the invention described here, the invention is an aforementioned hygienic ventilation system comprising a hygienic ventilation assembly consisting of a housing into which a supply air passage extends between a main supply connection and at least one auxiliary supply connection and supply flow control means to ensure a supply airflow from the main supply connection via the supply flow passage to at least one auxiliary supply connections; and an exhaust flow passage that extends between a main exhaust flow connection and at least one auxiliary exhaust flow connection and exhaust flow control means to ensure an air exhaust flow from the at least one auxiliary exhaust flow connection via the exhaust flow passage to the main exhaust flow connection.

In another embodiment, which may occur in combination with the other aspects and embodiments of the invention described here, the invention is an aforementioned hygienic ventilation system comprising a first housing in which the supply current passage that extends between a main supply connection and at least one auxiliary supply connection and supply flow control means to ensure a supply airflow from the main supply connection via the supply flow passage to at least one auxiliary supply connections; and a second housing in which an exhaust flow passage extends between a main exhaust flow connection and at least one auxiliary exhaust flow connection and exhaust flow control means to ensure an air exhaust flow from the at least one auxiliary exhaust flow connection via the exhaust flow passage to the main exhaust flow connection.

One embodiment, which may occur in combination with the other aspects and embodiments of the invention described here, involves an aforementioned hygienic ventilation system, further comprising a heat exchanger using which the supply air flow and exhaust flow passages are in a heat exchanging relationship to each other. In an additional embodiment, an aforementioned hygienic ventilation system or assembly also has a bypass element to partially or completely bypass the supply flow or exhaust flow air past the heat exchanger.

In a third aspect of the invention, which may arise in combination with the other aspects and designs of the invention described here, the invention contains a hybrid ventilation system comprising an aforementioned central hygienic ventilation system and a decentralized hygienic ventilation system for bringing outside air into the building. The decentralized air supply system can passively allow air to flow in by using the influence of the pressure difference between the interior and exterior of the building to bring outside air into the building, or actively bring air in using mechanical ventilation. The decentralized air supply system can be designed as a window, door, sliding door, grate or in particular a summer night ventilation shutter.

In a fourth embodiment of the invention, which may occur in combination with the other aspects and embodiments of the invention described here, the invention involves a computer-implemented method for ventilating and cooling a building, comprising the steps from development through a processor, a control signal for controlling the exhaust flow control means of an aforementioned hygienic ventilation system; the provision by the processor of the control signal to the exhaust flow control means and controlling the exhaust flow control means in reaction to the control signal to adjust the exhaust flow rate to an air supply flow rate Q_{ETA} that is consistent with the sum of the air supply rate Q_{SUP} and a pre-set thermal flow rate until that is reached.

In a fifth aspect of the invention, which may occur in combination with the other aspects and embodiments of the invention described herein, the invention involves a data processing device comprising a processor configured to execute the steps of the aforementioned method.

In a sixth aspect of the invention, which may occur in combination with the other aspects and embodiments of the invention described herein, the invention comprises a computer programme that contains the instructions to have the aforementioned data processing device execute the steps of the aforementioned method.

In a seventh aspect of the invention, which may occur in combination with the other aspects and embodiments of the invention described herein, the invention has a computer-readable data storage unit containing the aforementioned computer programme.

In a last aspect of the invention, which may occur in combination with the other aspects and embodiments of the invention described herein, the invention involves a building, such as a residence or apartment, with two or more rooms containing the aforementioned hygienic ventilation system or hybrid ventilation system.

### Summary description of the figures

The invention will be explained in more detail using an embodiment shown in the figure.
Figure 1 shows a cross section of a simplified representation of a residence according to a first embodiment of the current invention;
Figure 2 shows a schematic view of a hygienic ventilation system according to one embodiment of the current invention;
Figure 3 shows a cross section of a simplified representation of an apartment building according to one embodiment of the current invention, and
Figures 4 show various flows of the hygienic ventilation system shown in figure 2 during various modes of operation.

### Detailed description of the figures

The current invention will be described with regard to particular embodiments and with reference to certain figures, but the invention is not limited to these and is only determined by the claims. The figures described are only schematic and non-limiting. In the figures, the size of certain element is exaggerated and not drawn to scale for illustrative purposes. The dimensions and the relative dimensions are not necessarily consistent with actual practical designs of the invention.

Furthermore, the terms first, second, third and the like are used in the description and claims to differentiate between similar elements and not necessarily to describe a sequential or chronological sequence. The terms are interchangeable under fitting circumstances and the embodiments of the invention can be applied in sequences other than those described or illustrated here.

Moreover, the terms, top, bottom, over, under and the like are used in the description and claims are used for illustrative purposes and not necessarily to describe relative positions. The terms used are interchangeable under fitting circumstances and the embodiments of the invention described can be applied in other orientations than described or illustrated here.

Furthermore, the various embodiments, even though called "preferred designs" must be considered rather as a manner of example of how the invention can be designed than as a limitation of the range of the invention.

The term "encompassing", used in the claims, must not be interpreted as being limited to the resources or steps listed after it. The term does not exclude other elements or steps. The term should be interpreted as specifying for the presence of the listed features, elements, steps or components which are referenced, but does not exclude the presence or addition of one or more other features, elements, steps or components or groups thereof. The range of the expression "a design encompassing resources A and B" must thus not be limited to designs that consist only of A and B. The intention is that, with regard to the current invention, only the components A and B of the design are summarized, and the claim must be further interpreted as they also contain equivalents of these components.

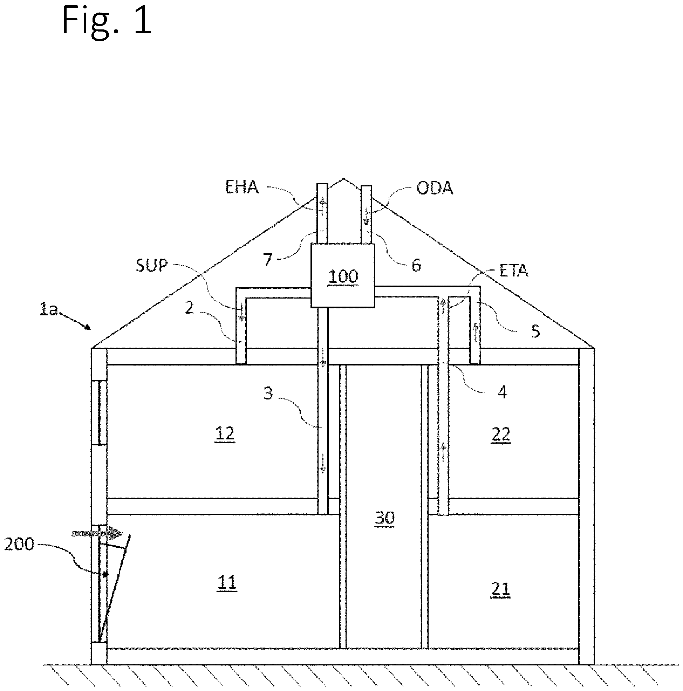

Fig. 1 shows a building 1a in the form of a residence consisting of multiple rooms 11, 12, 21, 22 and traffic area 30, such as a passageway, hallway or landing that provides access to the rooms. The building 1a shown in figure 1 has residential spaces 11, 12 in the form of rooms, such as a living room or a bedroom, into which the supply air SUP can be pumped in via the auxiliary supply flow passages 2, 3. Return air, ETA can also be removed through auxiliary exhaust flow passages 4, 5 from the functional spaces 21, 22 in the form of rooms, such as a toilet room, bathroom or kitchen. Each of these auxiliary passages 2, 3, 4, 5 are connected to an auxiliary connection 113, 114; 123 of a hygienic ventilation system 100. With one or more distribution pieces (not shown), multiple similar auxiliary passages can be connected to one auxiliary connection. The building also contains a main supply flow passage 6 for letting in outside air, ODA to a main supply connection 112 of a hygienic ventilation system and a main exhaust passage 7 to expel the exhaust air, EHA from a main exhaust flow connection 122 of the hygienic ventilation system.

The building 1a also has a decentralized air supply device in the form of a summer night vent 200 for supply of outside air into one of the spaces in the accommodation 11. A summer night vent is a vent that thanks to the supply of large ventilation airflows, ensures efficient cooling of the building according to the summer night ventilation principle. Typically, a summer night vent 200 has an anti-burglary, rain resistant and/or insect-proof outside grate that can be opened without any negative consequences. In particular, the summer night vent 200 is designed to be opened through an external signal or for manual opening, to send a signal which can be received by the hygienic ventilation system 100 or another connected ventilation system. In reaction to receiving the signal, the hygienic ventilation system 100 can create a thermal flow rate Q_{THERM} by upping the flow rate Q_{ETA} of the exhaust return air ETA to increase the pressure difference over the summer night vent 200. Thus, the same cooling capacity can be achieved (with regard to natural ventilation) with more freedom in the location and dimensions of the summer night vent 200. For example, a summer night vent with a smaller surface and fewer summer night hatches placed further apart will have the same air flow.

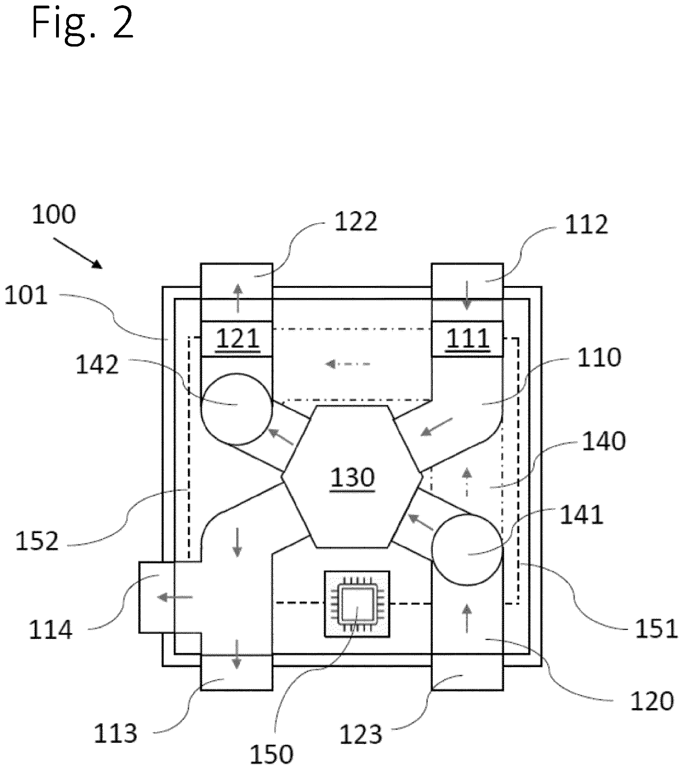

One embodiment of the hygienic ventilation system 100 is shown in figure 2. This hygienic ventilation system 100 has a housing shown by 101 with an air supply connection 112 to which the main supply passage 6 of figure 1 is to be connected. The hygienic ventilation system also has a main exhaust connection 122 to connect to the main exhaust passage 7. On the other end of the housing there are one or more auxiliary supply connections 113, 114, two in the embodiment shown here, and one or more auxiliary exhaust connections 123, one shown in the embodiment here.

The supply passage 110 extends between the main supply connection 111 and the auxiliary supply connections 113, 114. Correspondingly, the exhaust passage 120 extends between the auxiliary exhaust connections 123 and the main air exhaust connection 121. In this supply passage 110 and the exhaust passage 120, the entire heat exchanger labelled 130 can be placed, which ensures that energy can be exchanged among the supply and exhaust air. In addition, elements for the selective activation and deactivation of the heat exchange between the supply passage and the exhaust passage are, or a bypass element 140 ,141, 142 can be aligned to partially or completely allow the air supply and/or exhaust to bypass the heat exchanger. The supply and exhaust of air takes place using both of the boosters 111, 121, one of which is placed in the supply passage 110 and the other in the exhaust passage 120.

In the basic design of the hygienic ventilation system 100, the air flows depending on the resistance in the various passages without further options for adjustment toward the various rooms, and the air is removed respectively. In connection with offering the option for a desired distribution of the supply air, hygienic flow regulators (not shown) are placed in the auxiliary connections. Each flow regulator can be contained in a cassette that is inserted into a cassette chamber that is located at or behind the respective auxiliary supply connection. Each cassette can also have a measurement system that can contain a sensor, for example, for measuring the CO² value of the air, relative humidity and the like.

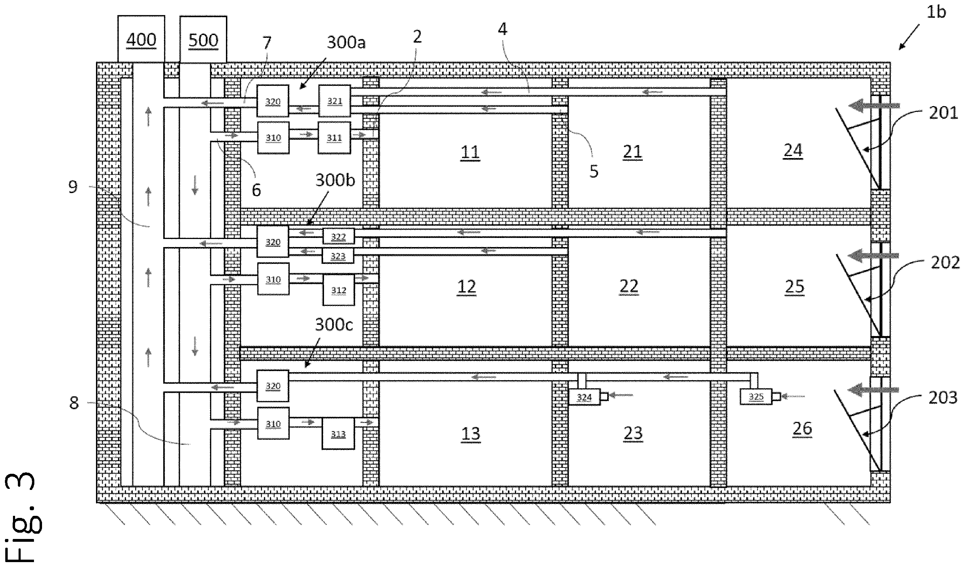

Fig. 3 shows a building 1b in the form of an apartment building consisting of multiple residential units with rooms 11-13, 21-26 and traffic areas (not shown) such as a passageway, hallway or landing that provides access to the rooms. Each of the residential units shown in figure 3 has residential spaces in the form of rooms, such as a living room or a bedroom, into which the supply air SUP can be pumped in via the auxiliary supply passages 2. Return air, ETA can also be removed through auxiliary exhaust flow passages 4 from the functional spaces 21-26 in the form of rooms, such as a toilet room, bathroom or kitchen. Each of these auxiliary passages 2, 4, 5 are connected to a hygienic ventilation system in the form of a hygienic ventilation assembly 300a-300c. With one or more distribution pieces (not shown), multiple similar auxiliary passages can be connected to one auxiliary connection. The building also contains a main supply flow passage 6 for letting in outside air, ODA to a supply connection of a hygienic ventilation assembly 300a-300c and a main exhaust passage 7 to expel the exhaust air, EHA from a main exhaust flow connection of the hygienic ventilation assembly 300a-300c.

Each residential unit also has a decentralized air supply device in the form of a summer night vent 201-203 for supply of outside air into one of the spaces in the accommodation. In particular, the summer night vent 200 is designed to be opened through an external signal or for manual opening, to send a signal which can be received by the hygienic ventilation system or another connected control system. In reaction to the receipt of the signal, the hygienic ventilation system can create a thermal flow rate Q_{THERM} by increasing the exhaust flow rate Q_{ETA} to increase the pressure difference over the summer night vent 200 so that a smaller hatch can be used to achieve the same flow rate.

In the basic design of the hygienic ventilation assembly 300a-300c, the collectively created air flows through a central control valve 311, 312, 313; 321 and depending on the resistance in the various auxiliary passages 2, 4, 5 without further options for adjustment toward the various rooms, and the air is suctioned out. In connection with offering the option for a desired distribution of the supply air, hygienic flow regulators (not shown) are placed in the auxiliary connections or auxiliary passages in zones 322-323 or locally 324-325. Each control valve can be enclosed in a cassette. Each cassette can also have a measurement system that can contain a sensor, for example, for measuring the CO2 value of the air, relative humidity and the like. Between the central, zonal or local control valve 311-313, 321-325 and a collective air passage 8, 9, there can be a constant volume regulator 310, 320 for limiting the maximum air flow through the auxiliary air passages. In addition, there can be a fire valve (not shown) between the constant volume regulator 310, 320 and the collective air passage 8, 9.

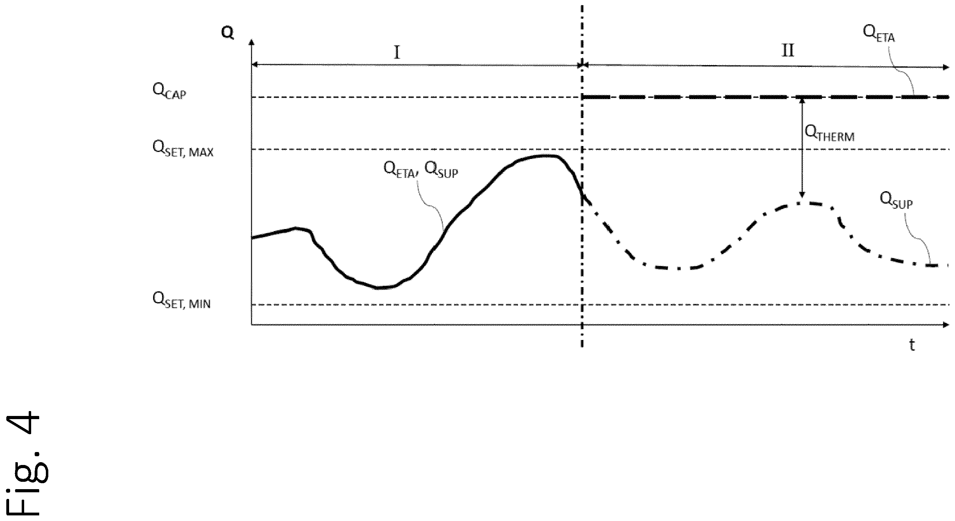

The function of the central hygienic ventilation system 100, 300a-300c is illustrated in figure 4. And internal or external control unit or processor 150 is designed to separate from each other, on the one hand to control the supply booster 122 or one or more supply valves 310-313 and on the other, to control the exhaust booster 121 or one or more exhaust valves 320-325. Controlling these elements is dependent on the ventilation mode of the hygienic ventilation system. As is clear in figure 4, which shows the time lapse of the air supply flow rate Q_{SUP} and the air exhaust flow rate Q_{ETA} in a hygienic ventilation mode I (left) and a summer night ventilation mode II (right).

In the hygienic ventilation mode I (left), the hygienic ventilation system functions like a conventional demand-driven ventilation system and the ventilation requirement is adjusted to the air quality between a minimum, set ventilation flow rate Q_{SET, MIN} and a maximum, set ventilation flow rate Q_{SET}, _{MAX}. The set ventilation flows Q_{SET} are determined based on the legal ventilation standards. The demand-driven ventilation flow can be controlled based on CO², humidity, time (day and night as 2-zone system) and any movement. The supply flow rate Q_{SUP} will then fluctuate between Q_{SET}, _{MIN} and Q_{SET}, _{MAX} based on the air quality. Because the hygienic air supply and the hygienic air exhaust must be kept in balance, the air exhaust flow fluctuates between Q_{ETA} in the same way as between Q_{SET, MIN} and Q_{SET, MAX}.

When transitioning to the summer night ventilation mode II (right), the hygienic ventilation system will remove more air than it supplies and thus runs imbalanced to be able to realize the desired supply flows with the summer night vent 200-203. Preferably, the air exhaust flow rate Q_{ETA} will be maximized to a level above the set ventilation range between Q_{SET}, _{MIN} and Q_{SET}, _{MAX} and thus use the excess capacity of the hygienic ventilation system to cool the building by ventilation. Thus the air exhaust flow rate Q_{ETA} will be consistent with the sum of the air supply flow rate Q_{SUP} and the additional thermal flow rate Q_{THERM}.

### List with reference numbers

- 1a, 1b.: Building
- 2, 3.: Auxiliary supply passage
- 4, 5.: Auxiliary exhaust passage
- 6.: Main supply passage
- 7.: Main exhaust passage
- 8.: Collective supply passage
- 9.: Collective exhaust passage
- 11, 13.: Living areas
- 21, 26.: Functional areas

- 100.: Hygienic ventilation system
- 101.: Housing
- 110.: Supply flow passage
- 111.: Supply booster
- 112.: Main supply connection
- 113, 114.: Auxiliary supply connection
- 120.: Exhaust flow passage
- 121.: Exhaust booster
- 122.: Main exhaust connection
- 123.: Auxiliary exhaust connection
- 130.: Heat exchanger
- 140.: Bypass
- 150.: Processor

- 200-203.: Summer night vent

- 300a-300c.: Hygienic ventilation assembly
- 310.: Constant supply volume regulator
- 311-313.: Supply control valve
- 320.: Constant exhaust volume regulator
- 321-325.: Exhaust control valve
- 400.: Collective supply ventilator
- 500.: Collective exhaust ventilator

- ETA.: Exhaust air from the residence to the ventilation system
- EHA.: Exhaust air from the ventilation system to the outside
- ODA.: Supply air from the outside to the ventilation system
- SUP.: Supply from the ventilation system to the residence

The embodiments of the invention and its aspects are further characterized in the following clauses.

Clause 1 Method for controlling a central hygienic ventilation system for ventilating and cooling a building by ventilation, said central hygienic ventilation system comprising:
a supply flow passage that extends between a main supply connection and at least one auxiliary supply connection and supply flow control units to ensure an air supply flow from the main supply connection via the supply flow passage to at least one auxiliary supply connection; and
an exhaust flow passage that extends between a main exhaust connection and at least one auxiliary exhaust connection and exhaust flow control units to ensure an air exhaust flow from the main exhaust connection via the exhaust flow passage to at least one auxiliary exhaust connection,
the method further comprises the steps:
- ensuring the air supply flow with an air supply flow rate Q_{SUP} as a function of one or more parameters related to the air quality in one or more rooms of the building; and
- ensuring the air exhaust flow with an air exhaust flow of Q_{ETA} that is consistent with the sum of the air supply flow rate Q_{SUP} and a thermal flow rate Q_{THERM}.

Clause 2. Method according to clause 1, wherein the supply flow control means are formed by a supply booster for creating an air supply flow from the main supply connection via the supply flow passage to the at least one auxiliary supply connection and;
wherein the exhaust flow control means are formed by an exhaust booster for creating an air exhaust flow from the main supply connection via the exhaust flow passage to the at least one auxiliary exhaust connection,
the method further comprises the steps:
   - - ensuring the air supply flow by creating the air supply with the air supply flow rate Q_{SUP} with the supply booster; and
   - - ensuring the air exhaust flow by creating the air exhaust flow with the air supply flow rate Q_{ETA} with the supply booster.

Clause 3. Method according to clause 1, wherein the supply flow control means are formed by one or more supply control valves to control the air supply flow from the main supply connection via the supply flow passage to the at least one auxiliary supply connection; and
wherein the exhaust flow control means are formed by one or more exhaust control valves for creating an air exhaust flow from the main exhaust connection via the exhaust flow passage to the at least one auxiliary exhaust connection,
the method further comprises the steps:
   - ensuring the air supply flow by creating the air supply flow by controlling the air supply flow rate Q_{SUP} with the supply regulator valves; and
   - ensuring the air exhaust flow by creating the air exhaust flow with the air supply flow rate Q_{ETA} with the exhaust control valves.

Clause 4. Method according to clause 3, wherein one of the supply control valves is formed by a constant supply volume regulator for limiting the air supply flow, and wherein one of the exhaust control valves is formed by a constant exhaust volume regulator for limiting the exhaust flow.

Clause 5. Method according to one of the preceding clauses, the method comprising controlling the supply and exhaust control means based on one or more parameters related to the ventilation mode of the hygienic ventilation system such that:
- when the hygienic ventilation system is in a hygienic ventilation mode, the air supply flow rate Q_{SUP} and exhaust flow rate Q_{ETA} are consistent with a hygienic flow related to the air quality in one or more rooms of the building,
- when the hygienic ventilation system is in a summer night ventilation mode, the air supply flow air supply flow rate Q_{SUP} is consistent with the hygienic flow related to the air quality in one or more rooms of the building and the air exhaust flow rate Q_{ETA} is consistent with the sum of the hygienic flow and a thermal flow rate Q_{THERM}.

Clause 6. Method according to clause 5, said central hygienic ventilation system further comprising a heat exchanger using which the supply flow passage and the exhaust flow passage are in a heat-exchanging relationship with each other, wherein
- when the hygienic ventilation system is in the summer night ventilation mode, the hygienic ventilation system is designed for heat exchange using the heat exchanger to between the air supply flow and hinder the air exhaust flow.

Clause 7. Hygienic ventilation system for ventilation and cooling a building via ventilation, configured to execute a method according one of the preceding clauses, said hygienic ventilation system comprising
a supply flow passage that extends between a main supply connection and at least one auxiliary supply connection and supply flow control units to ensure an air supply flow from the main supply connection via the supply flow passage to at least one auxiliary supply connection; and
an exhaust flow passage that extends between a main exhaust connection and at least one auxiliary exhaust connection and exhaust flow control units to ensure an air exhaust flow from the main exhaust connection via the exhaust flow passage to at least one auxiliary exhaust connection.

Clause 8. Hygienic ventilation system according to clause 7, comprising a ventilation assembly for ventilating and cooling a building via ventilation, configured to execute a method according to one of the preceding clauses, said hygienic ventilation system comprising a housing containing the following:
a supply flow passage that extends between a main supply connection and at least one auxiliary supply connection and supply flow control units to ensure an air supply flow from the main supply connection via the supply flow passage to at least one auxiliary supply connection; and
an exhaust flow passage that extends between a main exhaust connection and at least one auxiliary exhaust connection and exhaust flow control units to ensure an air exhaust flow from the main exhaust connection via the exhaust flow passage to at least one auxiliary exhaust connection.

Clause 9. Hygienic ventilation system according to clause 7, comprising a ventilation assembly for ventilating and cooling a building via ventilation, configured to execute a method according one of the preceding clauses, said hygienic ventilation system comprising a first housing containing the following:
a supply flow passage that extends between a main supply connection and at least one auxiliary supply connection and supply flow control units to ensure an air supply flow from the main supply connection via the supply flow passage to at least one auxiliary supply connection; and
   a second housing containing the following:
an exhaust flow passage that extends between a main exhaust connection and at least one auxiliary exhaust connection and exhaust flow control units to ensure an air exhaust flow from the main exhaust connection via the exhaust flow passage to at least one auxiliary exhaust connection.

Clause 10. Method pursuant to one of the preceding clauses 7-9, further comprising a heat exchanger using which the supply flow passage and the exhaust flow passage are in a heat-exchanging relationship with each other.

Clause 11. Hybrid ventilation system for ventilation and ventilative cooling of a building, comprising:
- a central hygienic ventilation system according to one of the preceding clauses 7-10; and
- a decentralized air supply device for the supply of outside air via an opening in an outside facade of the building.

Clause 12. Hybrid ventilation system according to clause 11, wherein the decentralized air supply device is designed as a summer night vent.

Clause 13. Computer-implemented method for ventilation and ventilative cooling of a building, comprising the steps of:
- generating, by a processor, a control signal for controlling the exhaust flow control means of a hygienic ventilation system according to one of the preceding clauses 7-10;
- providing, by the processor, a control signal to the exhaust flow control means; and
- controlling the exhaust flow control means in reaction to the control signal to adjust the exhaust flow to the air exhaust flow rate Q_{ETA} that is consistent with the sum of the air supply flow rate Q_{SUP} and a pre-set non-trivial thermal flow rate Q_{THERM} is achieved.

Clause 14. Data processing device comprising a processor configured to execute the steps of the method in clause 13.

Clause 15. Assembly comprising a hygienic ventilation system according to one of the preceding clauses 7-10 and a data processing device according to clause 14.

Clause 16. A computer programme that contains instructions to have the data processing device according to clause 14 execute the steps of the method according to clause 13.

Clause 17. A computer-readable storage medium containing the computer programme according to clause 16.

## Claims

1. Method for controlling a central hygienic ventilation system for ventilating and ventilative cooling of a building, said central hygienic ventilation system comprising:
a supply flow passage that extends between a main supply connection and at least one auxiliary supply connection and supply flow control units to ensure an air supply flow from the main supply connection via the supply flow passage to at least one auxiliary supply connection; and
an exhaust flow passage that extends between a main exhaust connection and at least one auxiliary exhaust connection and exhaust flow control units to ensure an air exhaust flow from the main exhaust connection via the exhaust flow passage to at least one auxiliary exhaust connection,
the method comprising the simultaneous execution of the steps of:
- ensuring the supply airflow with an air supply flow rate Q_{SUP} through the at least one auxiliary supply connection as a function of one or more parameters related to the air quality in one or more rooms of the building; and
- ensuring the air exhaust flow with an air exhaust flow of Q_{ETA} that is consistent with the sum of the air supply flow rate Q_{SUP} and a thermal flow rate Q_{THERM}.

2. Method according to claim 1, wherein the supply flow control means are formed by a supply booster for creating an air supply flow from the main supply connection via the supply flow passage to the at least one auxiliary supply connection and;
wherein the exhaust flow control means are formed by an exhaust booster for creating an air exhaust flow from the main supply connection via the exhaust flow passage to the at least one auxiliary exhaust connection,
the method further comprises the steps:
- ensuring the air supply flow by creating the air supply with the air supply flow rate Q_{SUP} with the supply booster; and
- ensuring the air exhaust flow by creating the air exhaust flow with the air supply flow rate Q_{ETA} with the supply booster.

3. Method according to claim 1, wherein the supply flow control means are formed by one or more supply control valves for controlling an air supply flow from the main supply connection via the supply flow passage to the at least one auxiliary supply connection; and
wherein the exhaust flow control means are formed by one or more exhaust control valves for creating an air exhaust flow from the main exhaust connection via the exhaust flow passage to the at least one auxiliary exhaust connection,
the method further comprises the steps:
- ensuring the air supply flow by creating the air supply flow by controlling the air supply flow rate Q_{SUP} with the supply regulator valves; and
- ensuring the air exhaust flow by creating the air exhaust flow with the air supply flow rate Q_{ETA} with the exhaust control valves.

4. Method according to claim 3, wherein one of the supply control valves is formed by a constant supply volume regulator for limiting the air supply flow, and wherein one of the exhaust control valves is formed by a constant exhaust volume regulator for limiting the exhaust flow rate.

5. Method according to one of the preceding claims, the method comprising controlling the supply and exhaust control means based on one or more parameters related to the ventilation mode of the hygienic ventilation system such that:
- when the hygienic ventilation system is in a hygienic ventilation mode, the air supply flow rate Q_{SUP} and exhaust flow rate Q_{ETA} are consistent with a hygienic flow related to the air quality in one or more rooms of the building,
- when the hygienic ventilation system is in a summer night ventilation mode, the air supply flow air supply flow rate QSUP is consistent with the hygienic flow related to the air quality in one or more rooms of the building and the air exhaust flow rate Q_{ETA} is consistent with the sum of the hygienic flow and a thermal flow rate Q_{THERM}.

6. Method according to claim 5, said central hygienic ventilation system further comprising a heat exchanger using which the supply flow passage and the exhaust flow passage are in a heat-exchanging relationship with each other, wherein
- when the hygienic ventilation system is in the summer night ventilation mode, the hygienic ventilation system is designed for heat exchange using the heat exchanger to between the air supply flow and hinder the air exhaust flow.

7. Hygienic ventilation system for ventilation and cooling a building via ventilation, configured to execute a method according one of the preceding claims, said hygienic ventilation system comprising
a supply flow passage that extends between a main supply connection and at least one auxiliary supply connection and supply flow control units to ensure an air supply flow from the main supply connection via the supply flow passage to at least one auxiliary supply connection; and
an exhaust flow passage that extends between a main exhaust connection and at least one auxiliary exhaust connection and exhaust flow control units to ensure an air exhaust flow from the main exhaust connection via the exhaust flow passage to at least one auxiliary exhaust connection.

8. Hygienic ventilation system according to claim 7, comprising a ventilation assembly for ventilating and cooling a building via ventilation, configured to execute a method according one of the preceding claims, said hygienic ventilation system comprising a housing containing the following:
a supply flow passage that extends between a main supply connection and at least one auxiliary supply connection and supply flow control units to ensure an air supply flow from the main supply connection via the supply flow passage to at least one auxiliary supply connection; and
an exhaust flow passage that extends between a main exhaust connection and at least one auxiliary exhaust connection and exhaust flow control units to ensure an air exhaust flow from the main exhaust connection via the exhaust flow passage to at least one auxiliary exhaust connection.

9. Hygienic ventilation system according to claim 7, comprising a ventilation assembly for ventilating and cooling a building via ventilation, configured to execute a method according one of the preceding claims, said hygienic ventilation system comprising a first housing containing the following:
a supply flow passage that extends between a main supply connection and at least one auxiliary supply connection and supply flow control units to ensure an air supply flow from the main supply connection via the supply flow passage to at least one auxiliary supply connection; and
a second housing containing the following:
an exhaust flow passage that extends between a main exhaust connection and at least one auxiliary exhaust connection and exhaust flow control units to ensure an air exhaust flow from the main exhaust connection via the exhaust flow passage to at least one auxiliary exhaust connection.

10. Hybrid ventilation for ventilation and ventilative cooling of a building, comprising:
- a central hygienic ventilation system according to one of the preceding claims 7-9; and
- a decentralized air supply device for the supply of outside air via an opening in an outside facade of the building.

11. Computer-implemented method for ventilation and ventilative cooling of a building, comprising the steps of:
- generating, by a processor, a control signal for controlling the exhaust flow control means of a hygienic ventilation system according to one of the preceding claims 7-9;
- providing, by the processor, a control signal to the exhaust flow control elements; and
- controlling the exhaust flow control means in reaction to the control signal to adjust the exhaust flow to an air exhaust flow rate Q_{ETA} that is consistent with the sum of the air supply flow rate Q_{SUP} and a pre-set non-trivial thermal flow rate Q_{THERM} is achieved.

12. Data processing device comprising a processor configured to execute the steps of the method in claim 11.

13. Assembly comprising a hygienic ventilation system according to one of the preceding claims 7-9 and a data processing device according to claim 12.

14. A computer programme that contains instructions to have the data processing device according to claim 12 execute the steps of the method according to claim 11.

15. A computer-readable storage medium containing the computer programme according to claim 14.
